# EUROPEAN PATENT SPECIFICATION

(11) **EP 3 502 944 B1**
(45) Date of publication and mention of the grant of the patent: **09.02.2022**
(21) Application number: 18213891.7
(22) Date of filing: 19.12.2018
(51) Int. Cl.: G06F 21/55, G06F 21/56

(54) **DETECTING SCRIPT-BASED MALWARE CROSS REFERENCE TO RELATED APPLICATIONS**
ERKENNUNG VON SKRIPTBASIERTEM SCHADPROGRAMM-QUERVERWEIS AUF VERWANDTE ANWENDUNGEN
DÉTECTION DE RÉFÉRENCE CROISÉE DE LOGICIEL MALVEILLANT BASÉE SUR SCRIPT VERS DES APPLICATIONS CONNEXES

(30) Priority: 19.12.2017 US 201762607870 P; 18.12.2018 US 201816224678
(43) Date of publication of application: 26.06.2019
(60) Divisional application: 21202731.2
(73) Proprietor: CrowdStrike, Inc., Irvine CA 92618 (US)
(72) Inventor: IONESCU, Ion-Alexandru, Seattle, WA Washington 98199 (US); TANDA, Satoshi, Burnaby, British Columbia V5B 3P9 (CA)
(74) Representative: Murgitroyd & Company

(56) References cited:
- US-A1- 2007 113 282
- US-A1- 2017 249 459
- PHU H. PHUNG ET AL: "Lightweight self-protecting JavaScript", INFORMATION, COMPUTER, AND COMMUNICATIONS SECURITY, 12 March 2009 (2009-03-12), page 47, XP055573590, 2 Penn Plaza, Suite 701 New York NY 10121-0701 USA DOI: 10.1145/1533057.1533067 ISBN: 978-1-60558-394-5

## Description

### CROSS REFERENCE TO RELATED APPLICATIONS

This is a non-provisional of and claims priority to U.S. Provisional Patent Application No. 62/607,870, filed on December 19, 2017.

### BACKGROUND

With computer and Internet use forming an ever greater part of day to day life, security exploits and cyberattacks directed to stealing and destroying computer resources, data, and private information are becoming an increasing problem. Some attacks are carried out using "malware" or malicious software. "Malware" is a general term used to refer to a variety of forms of hostile or intrusive computer programs that, e.g., disrupt computer operations or access sensitive information stored on a computer (e.g., viruses, worms, Trojan horses, ransomware, rootkits, keyloggers, spyware, adware, or rogue security software)

Windows^{®} PowerShell^{®} is a scripting engine and language that is included in more recent versions of the Windows^{®} operating system. PowerShell^{®} provides access to various operating system components and can be exploited by malware. Because PowerShell^{®} can run scripts directly in memory, detection methods based on file content are not reliable. The same is true of other scripting engines and languages such as JavaScript^{®}, Jscript, VBScript^{®}, PerlScript, BASIC, Ruby, Visual Basic for Applications (VBA) etc.

US 2017/249459 A1 discloses a method including: determining that an executable implements a sub-execution environment, the sub-execution environment being configured to receive an input, and the input triggering at least one event at the sub-execution environment; intercepting the event at the sub-execution environment; and applying a security policy to the intercepted event, the applying of the policy comprises blocking the event, when the event is determined to be a prohibited event. Systems and articles of manufacture, including computer program products, are also disclosed.

US 2007/113282 A1 discloses a device for receiving and processing data content having at least one original function call includes a hook script generator and a script processing engine. The hook script generator is configured to generate a hook script having at least one hook function. Each hook function is configured to supersede a corresponding original function. The script processing engine is configured to receive and process a combination of the hook script and the data content. The hook function corresponding to the data content original function is executed when the original function is called. The hook function provides a run-time detection and control of the data content processing.

### SUMMARY

Accordingly there are provided methods and computer readable media as defined in the claims that follow.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items or features.
FIGS. 1A and 1B are block diagrams illustrating relevant elements of a computer that has been configured to prevent execution of malicious or harmful commands that might otherwise be executed by a scripting engine.
FIG. 2 illustrates an example method for identifying certain types of host processes and for injecting an unmanaged interface module into those processes.
FIG. 3 illustrates an example technique that may be performed by the unmanaged interface module for identifying target software components and for injecting a managed interface module into certain processes.
FIG. 4 illustrates an example technique that may be performed by the managed interface module for hooking into certain methods of a scripting engine.
FIG. 5 illustrates an example technique that may be performed by a malware detection system for preventing execution by a scripting engine of malicious or harmful scripts.
FIG. 6 illustrates an example technique that may be performed by a malware detection system for preventing execution by a scripting engine of malicious or harmful scripts.
FIG. 7 is a block diagram of an example computer and network environment in which the described techniques may be implemented.

### DETAILED DESCRIPTION

Implementations described herein provide enhanced visibility of and protection from malware that is designed to exploit the capabilities of certain types of scripting engines. Specifically, the described techniques can be implemented to detect and block malicious command content (e.g., commands and command scripts) from being executed by these scripting engines.

A scripting engine typically exposes a command line or graphical user interface that a person can use to control various computer settings. Some scripting engines allow command-based access to low-level computer parameters, settings, and information. Scripting commands are typically humanreadable text strings, formatted in a language that corresponds to the particular scripting engine. The scripting engine interprets the commands at run-time to produce machine code that is executed by a computer (e.g., using a just-in-time, JIT, compiler), or to otherwise carry out program instructions (e.g., as in some non-JIT interpreters).

In some scenarios, a person may manually and interactively type commands to be submitted to the scripting engine. In addition, the functionality of a scripting engine is sometimes provided as a hosted software component that can be loaded, run, and utilized by a host process. A host process may use the scripting engine to execute command-line commands as well as to execute scripts that comprise multiple commands. An attacker might use this functionality to execute commands that impair or compromise a computer.

As an example of a scripting engine, the PowerShell^{®} scripting engine is available for use within the Windows^{®} operating system environment. The PowerShell^{®} scripting engine is a software component that can be loaded and used by a host process. A user-facing shell application, which is referred to as the PowerShell^{®} interactive UI shell, is also available for use with the PowerShell^{®} scripting engine. The PowerShell^{®} interactive UI shell allows a user to interactively enter commands and write, test, and debug scripts in a Windows^{®}-based graphic user interface.

In use, the PowerShell^{®} interactive UI shell is a host process that hosts an instance of the PowerShell^{®} scripting engine and that submits interactively entered script commands to the PowerShell^{®} scripting engine for execution. The PowerShell^{®} scripting engine may also be hosted by other processes, which might seek to use the PowerShell^{®} capabilities to attack various aspects of a computer and its network.

In addition to its use within the PowerShell^{®} interactive UI shell, the PowerShell^{®} scripting engine can be loaded and used by other user-mode host processes. In particular, user-mode processes, including the PowerShell^{®} interactive UI shell, can create an instance of the PowerShell^{®} scripting engine and submit commands to it.

Scripting engines are available for various different command languages, such as JavaScript^{®}, JScript, VBScript^{®}, PerlScript, BASIC, Ruby, Visual Basic for Applications (VBA), etc. Scripting engines for these languages may also be loaded by a host process and used to execute various types of commands and command scripts, including commands and scripts that access and/or modify system-level parameters and data.

In some examples described herein a scripting engine may be implemented to run within a run-time system such as the Common Language Run-time (CLR). Software written to run under the management of a run-time system includes intermediate-level code (sometimes referred to as "bytecode") that is compiled at run time into machine code, which is in turn executed by a computer central processing unit (CPU). A run-time code manager such as CLR manages code execution and in addition provides run-time services such as thread management, garbage collection, memory management, run-time reference checking, etc.

Code written to be to run within the CLR or another managed run-time environment is referred to as managed code. A software component or module using managed code is referred to as a managed software component or module. In the CLR environment, managed code is generated in accordance with what is known as the Common Language Infrastructure (CLI). C# compilers are typically used to generate CLI code for execution under the management of CLR.

In contrast, C and C++ compilers produce machine code that is executed directly by a CPU, without the benefit of run-time management and services. This type of code is referred to as unmanaged code. A software component or module using unmanaged code is referred to as an unmanaged software component or module.

Managed and unmanaged software modules are often packaged as dynamic link libraries and referred to as DLLs. A DLL written in C# is referred to as a managed DLL module. A DLL written in C or C++ is referred to as an unmanaged DLL module.

In order to detect malware and potentially malicious activities, it may be desired to monitor commands, including commands that are part of scripts, that a host process attempts to execute with a scripting engine. A software component referred to herein as a threat detection component may be configured to perform monitoring such as this. The threat detection component may be part of a larger malware detection system.

The threat detection component is configured to inject an unmanaged interface module into the host process. The unmanaged interface module is configured to detect situations in which the host process is loading a run-time system (e.g., CLR) or a scripting engine (e.g., the PowerShell^{®} scripting engine, JScript scripting engine, or other scripting engine), and, in response, to load a managed interface module into the host process. The managed interface module hooks into relevant methods of a scripting engine to intercept commands before they are executed and to block commands if they are determined to be potentially harmful.

The managed interface module and the unmanaged interface module are configured to communicate with each other within the host process. The unmanaged interface module is also configured to communicate with the threat detection component, thereby forming a bidirectional communication channel between the managed interface module and the threat detection component.

In operation, the managed interface module intercepts commands before they are executed by the scripting engine, and sends them to the threat detection module through the unmanaged interface module. The threat detection component determines whether the script commands should be blocked, and if so, communicates that determination through the unmanaged interface module to the managed interface module. The managed interface module then blocks the script commands via its hooks into the scripting engine.

Although certain details are described herein with reference to the PowerShell^{®} scripting engine, the same or similar techniques may be applied to scripting engines for different scripting languages such as JScript^{®} and various other scripting languages.

As used herein, the terms "component," "module," and similar terms are intended to represent example divisions of the described operations (e.g., implemented in software or hardware) for purposes of discussion, and is not intended to represent any type of requirement or required method, manner or organization. Therefore, while various components and modules are discussed herein, their functionality or similar functionality can be arranged differently (e.g., combined into a smaller number of modules, broken into a larger number of modules, etc.).

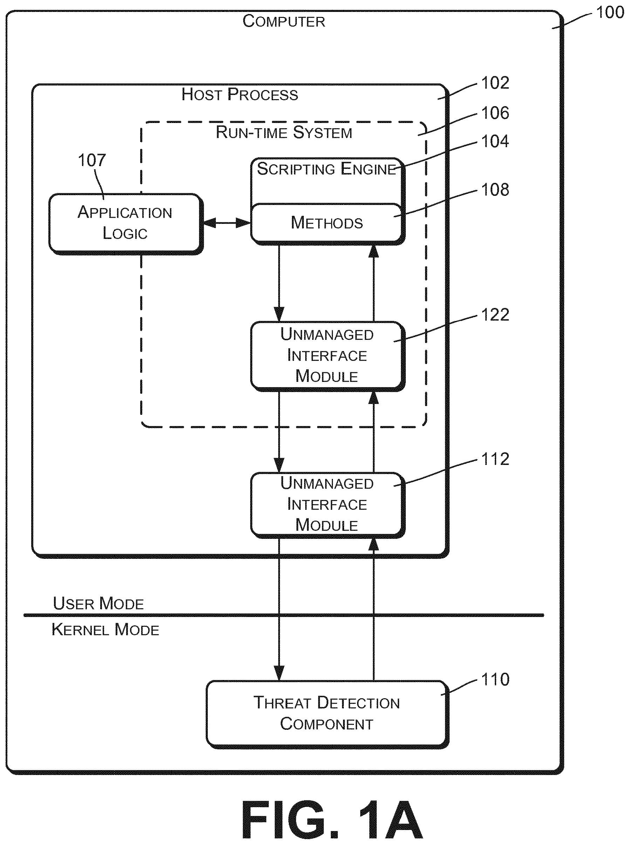

FIG. 1A illustrates a software configuration, implemented on a computer 100, that allows monitoring and blocking of command content that is submitted by a host process 102 for execution by an instance of a hosted scripting engine 104. As used herein, the term "command content" refers to any combination of one or more commands and/or command scripts that are formatted to be interpreted at run-time and that are intended for execution by a command execution component such as is commonly referred to as a scripting engine. A script comprises one or more commands that are executed together. A command may in some embodiments comprise textual data, such as text strings, in a format that is readable, writable, and understandable by human operators. For example, commands may comprise ASCII strings. Command content may include script files, typed command strings, dynamically executed strings executed via the Invoke-Expression cmdlet of the PowerShell^{®} scripting engine, commands supplied as command line parameters, etc.

Command content may in some cases be entered interactively by a person using a command line interface shell. For example, the Windows^{®} PowerShell^{®} interactive UI shell may be used to interactively enter commands to be executed by the PowerShell^{®} scripting engine.

In the illustrated example, the host process 102 is a non-privileged, user-mode process. As one example, the host process 102 may comprise a user-installed application or any other computer software, including malware. As another example, the host process 102 may comprise a user interface (UI) shell for the scripting engine 104, such as the PowerShell^{®} interactive UI shell.

The host process 102 in this example includes managed code that runs under the management of a run-time system 106, also referred to herein as a run-time code manager. For example, the run-time system 106 may comprise the Common Language Run-time (CLR). The host process 102 may utilize managed code developed in the .NET Framework or .NET Core environments for execution within CLR.

The host process 102 may be implemented by an application. The functions and operations of such an application are represented in FIG. 1A as application logic 107. An attacker may provide or modify the application logic 107 so that it executes harmful command content using the scripting engine 104. The application logic 107 may be implemented managed and/or unmanaged code.

In the illustrated embodiment, the scripting engine 104 comprises a hosted command interpreter that interprets and executes command content at run-time. For example, the scripting engine 104 may comprise an instance of the Windows^{®} PowerShell^{®} scripting engine, which is hosted as a managed software component within the host process 102. In other embodiments, the scripting engine 104 may comprise a scripting engine for any other scripting language, including scripting engines that support JavaScript^{®}, Jscript, VBScript^{®}, PerlScript, BASIC, Ruby, Visual Basic for Applications (VBA) and other scripting languages.

The scripting engine 104 has one or more APIs that expose various methods 108 for access and use by the application logic 107 of the host process 102. Most relevant to this discussion, the methods 108 allow the application logic 107 to submit command content for execution by the scripting engine 104. In some cases, the application logic 107 may provide command content without user interaction. In other cases, such as when the host process 102 is the PowerShell^{®} interactive UI shell, the application logic 107 may accept command content that is entered interactively by a user and may provide the command content to the scripting engine 104 through the methods 108.

A threat detection component 110 is installed on the computer 100 as a privileged, kernel-mode component. The threat detection component 110 may implement various techniques for receiving intercepted command content, for determining whether to block the command content, and for blocking execution of potentially harmful software. Note that the threat detection component 110 is shown here as a representation of logical functionality that may be performed by any of various software components, and which may in some cases be performed by multiple software components. Generally, the threat detection component 110 comprises instructions for performing certain actions described herein. The instructions are represented in memory of the computer 100 as code that is executed by one or more processors of the computer 100.

An unmanaged interface module 112 and a managed interface module 114 are used for communications between the host process 102 and the threat detection component 110. In some embodiments, each of the modules 112 and 114 may comprise a dynamic link library (DLL), each of which comprises instructions for performing actions as described herein. In the case of the managed interface module 114, the instructions are represented by managed code that is written for execution under the management of the run-time system 106. In the case of the unmanaged interface module 112, the instructions are represented by unmanaged code that executes outside of the run-time system 106. The various software components and modules shown in FIG. 1A may communicate with each other using APIs (not shown) that are created and/or provided for that purpose.

Generally, the unmanaged interface module 112 and the managed interface module 114 work together to intercept command content from the scripting engine 104 and to provide the command content to the threat detection component 110 so that the threat detection component 110 can determine whether the command content should be blocked.

The threat detection component 110, the unmanaged interface module 112, and the managed interface module 114 may be configured to operate in either of two modes, referred to as "interpreter-only" mode and "full-visibility" mode. The interpreter-only mode is used to monitor command content provided by an interactive UI shell (UI) shell such as the PowerShell^{®} interactive UI shell. In this case, the interactive UI shell is the host process 102 and provides interactively typed command content to the scripting engine 104. The full-visibility mode is used to monitor commands that are provided not only by the user interface shell, but also by any other host process that uses the scripting engine 104.

In the interpreter-only mode, the threat detection component 110 injects the unmanaged interface module 112 into the host process 102 when the host process 102 is identified as an interactive UI shell such as the PowerShell^{®} interactive UI shell. In the full-visibility mode, the threat detection component 110 injects the unmanaged interface module 112 into the host process 102 when the host process 102 performs actions indicating that the scripting engine 104 or the run-time system 106 is going to be loaded.

The unmanaged interface module 112 is configured to detect when the host process 102 is loading either the scripting engine 104 or the run-time system 106. In response, the unmanaged interface module 112 injects the managed interface module 114 into the host process 102.

The managed interface module 114 is configured to intercept command content before its execution by the scripting engine 104. When (managed) modules implementing certain of the methods 108 are loaded, the managed interface module 114 installs inline hooks in them in order to intercept command content and to block execution of command content that is determined to be harmful or potentially harmful. When a call to a particular function is intercepted by a component, the component may respond by calling the particular function again using the same or different arguments. In some cases, the component may be configured to not call to the particular function, in order to prevent the function from being executed. Alternatively, the component may call a different function or invoke other functionality. In some cases, the component may throw an exception to prevent the function from executing against the command content. In the action 404, this capability is used to intercept calls to appropriate API methods of the scripting engine 104.

In the .NET Framework environment, inline hooking uses a technology called reflection, provided by the run-time system, to obtain metadata of the target function. Methods such as RuntimeHelpers.PrepareMethod, RuntimeHelpers._CompileMethod, or RuntimeMethodHandle.GetFunctionPointer are used to generate and obtain the address of native code to hook.

The unmanaged interface module 112 and the managed interface module 114 provide a bi-directional communication path between the threat detection component 110 and the hooked methods of the scripting engine 104. The unmanaged interface module 112 is configured to relay communications, including intercepted command content, between the threat detection component 110 and the managed interface module 114. For example, the unmanaged interface module 112 may relay intercepted command content from the managed interface module 114 to the threat detection component 110. Similarly, the unmanaged interface module 112 may relay responses from the threat detection component 110 to the managed interface module 114, such as responses indicating whether to block command content.

When command content is received by the threat detection component 110, the threat detection component 110 determines whether the command content should be blocked from execution and communicates this determination back to the managed interface module 114 through the unmanaged interface module 112. If the command content is to be blocked, the managed interface module 114 prevents the command content from being executed by the scripting engine 104.

In some implementations, the threat detection component 110 may receive command content and determine that it is safe to execute. In this case, the thread detection component may provide a reply that contains the original command content, and the managed interface module 114 may return that original command content to the hooked method from which it was originally obtained. In the case that the threat detection component 110 determines that the command content should be blocked, the managed interface module 114 may throw an exception, which effectively blocks execution of the command content. Alternatively, the reply from the threat detection component 110 may specify modified command content, such as a null string or modified command string, which the managed interface module 114 returns to the hooked method to effectively block execution of the original command content. In some cases, blocking the command content may comprise "faking" the success of an operation by returning modified command content such that the hooked method reports successful execution even though the original command content was not executed.

In other implementations, the threat detection component 110 may provide a reply as a directive indicating that the original command content should be blocked. In these implementations, the managed interface module 114 may interact with the hooked method in a way that result in the command content being blocked, such as by returning a null string to the hooked method rather than the original command content.

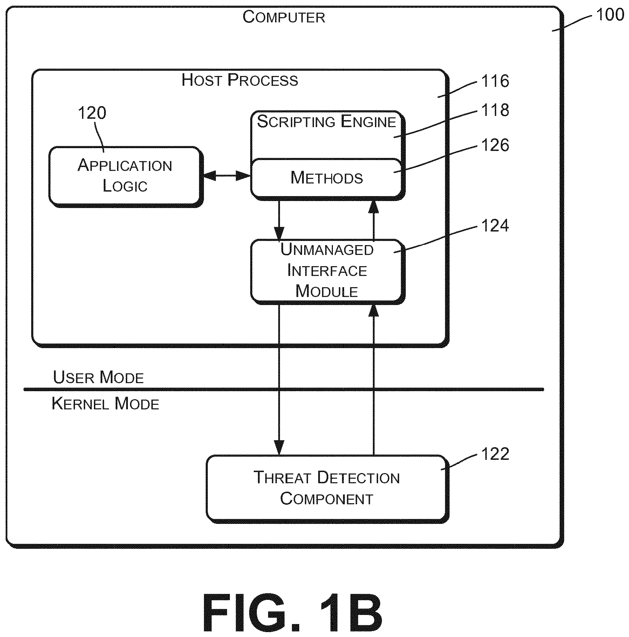

FIG. 1B illustrates a software configuration for use with scripting engines that are implemented using unmanaged code and that do not run under management of a run-time system. Scripting engines such as this include JavaScript^{®}, Jscript, VBScript^{®}, PerlScript, BASIC, Ruby, Visual Basic for Applications (VBA) etc. The configuration of FIG. 1B is similar to that of FIG. 1A, except as described below.

FIG. 1B shows the computer 100, a host process 116, and a scripting engine 118. In this example, the host process does not necessarily include managed code, and may not use a run-time system. In the illustrated example, the host process 116 is a non-privileged, user-mode process. As one example, the host process 116 may comprise a user-installed application or any other computer software, including malware. The application implements application logic 120 for performing its intended functions. In some cases, the host process 116 may comprise a user interface (UI) shell for the scripting engine 118.

In the illustrated embodiment, the scripting engine 118 comprises a hosted command interpreter that interprets and executes command content at run-time. For example, the scripting engine 118 may comprise an instance of the JScript^{®} scripting engine, which is hosted as an unmanaged software component within the host process 116. In other embodiments, the scripting engine 118 may comprise a scripting engine for any other scripting language, including scripting engines that support JavaScript^{®}, VBScript^{®}, PerlScript, BASIC, Ruby, Visual Basic for Applications (VBA) and other scripting languages.

A threat detection component 122 is installed on the computer 100 as a privileged, kernel-mode component. The threat detection component 122 may implement various techniques for receiving intercepted command content, for determining whether to block the command content, and for blocking execution of potentially harmful software. The threat detection component 122 is shown here as a representation of logical functionality that may be performed by any of various software components, and which may in some cases be performed by multiple software components. Generally, the threat detection component 122 comprises instructions for performing certain actions described herein. The instructions are represented in memory of the computer 100 as code that is executed by one or more processors of the computer 100.

In this example, an unmanaged interface module 124 is used to intercept command content and to provide it to the threat detection component. The unmanaged interface module 124 is injected into the host process 102 when the threat detection component 122 determines that the host process 116 is a process that runs a script engine such as the scripting engine 118. The unmanaged interface module 124 is injected in the same manner as the unmanaged interface module 112.

The unmanaged interface module 124 provides for communications between the host process 116 and the threat detection component 122. In some embodiments, the unmanaged interface module 124 may comprise a dynamic link library (DLL), which comprises instructions for performing actions as described herein. The various software components and modules shown in FIG. 1B may communicate with each other using APIs (not shown) that are created and/or provided for that purpose.

The unmanaged interface module 124 monitors to detect loading of the scripting engine 118 and installs hooks into relevant methods 126 of the scripting engine 118 in order to intercept command content before it is executed by the scripting engine 118 and to send the command content to the threat detection component 122. The unmanaged interface module 124 also receives communications back from the threat detection component 122 that instruct the unmanaged interface module whether or not to block execution of command content. The evaluation of command content by the threat detection component 122 is performed in the same way as described above with reference to FIG. 1A.

In some embodiments, an Antimalware Scan Interface (AMSI) may be available. AMSI is a software component used in the Windows^{®} operating system environment. AMSI has APIs that allow antimalware applications, such as the threat detection component 122, to scan command content before it is executed by the scripting engine 118. In cases where AMSI is present, it may be used, and the unmanaged interface module may interface with the AMSI rather than hooking into the scripting engine 118. Also, when AMSI is present the unmanaged interface module 124 can be loaded automatically by AMSI.

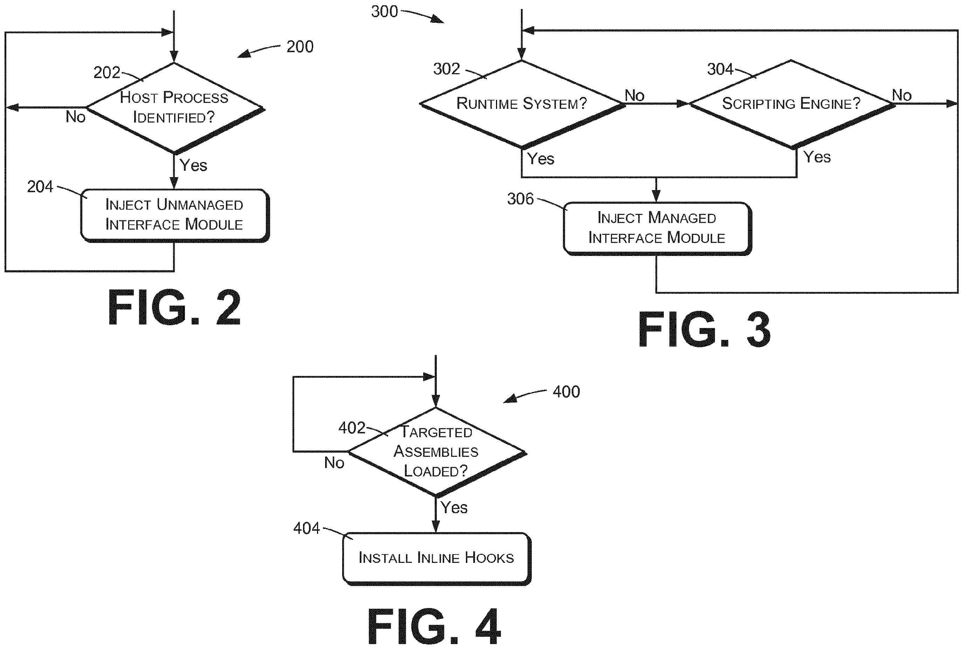

FIGS. 2, 3, 4, and 5 illustrate example techniques as logical flow graphs, each action of which represents a sequence of operations that can be implemented in hardware, software, or a combination thereof. In the case of software, the operations represent computer-executable instructions stored on one or more computer-readable storage media that, when executed by one or more processors, perform the recited action. Generally, computer-executable instructions include routines, programs, objects, components, data structures, and the like that perform particular functions or implement particular abstract data types. The order in which the operations are described is not intended to be construed as a limitation, and any number of the described operations can be combined in any order and/or in parallel to implement any illustrated technique.

The use of two different interface modules, one of which is managed and the other of which is unmanaged, allows for reliable detection of loaded modules in different situations. In particular, the managed code allows reliable detection of managed modules such as the scripting engine 104. Unmanaged code is not able to reliably do this. In addition, unmanaged code is not able to locate appropriate methods of the scripting engine 104 in order to install hooks.

Because of system limitations, however, the kernel-mode threat detection module 110 cannot inject managed code directly into the host process 102.

FIG. 2 illustrates an example technique 200 that may be performed by the threat detection component 110 (or another system component, and likewise throughout the remainder of this document) to inject the unmanaged interface module 112 into the host process 102. The technique 200 may be used in conjunction with the techniques described below with respect to FIGS. 3, 4, and 5, for blocking harmful command content from being executing by a scripting engine.

An action 202 comprises identifying an executing process, referred to herein as the host process 102, that is implemented using managed code and which therefore executes under management of the run-time system 106. For example, the action 202 may comprise identifying a .NET Framework or .NET Core process (i.e., an application developed in the .NET Framework or .NET Core environments).

In the full-visibility mode, the action 202 may comprise determining that a process is going to load the run-time system 106 for use. In the CLR environment, for example, this may be accomplished by detecting that a file named *mscoree.dll* or *coreclr.dll* is loaded or is being loaded by the host process 102. *mscoree.dll* and *coreclr.dll* are software modules that load the CLR run-time system.

In the interactive-only mode, the action 202 may comprise identifying a user interface shell such as the PowerShell^{®} interactive UI shell, which as described above is a host process that hosts the scripting engine 104 and provides interactively entered command content to the scripting engine 104.

An action 204, performed by the threat detection component 110 in response to the action 202 of identifying the host process 102, comprises injecting the unmanaged interface module 112 into the host process 102. This may be performed by redirecting a thread of the host process 102 using Asynchronous Procedure Call (APC), and more specifically by using the kernel-mode API named KeInsertQueueApc. The redirected thread is used to queue a job to a thread pool. The job performs the action 204 of loading (i.e., "injecting"), the unmanaged interface module 112. The job may be submitted to the thread pool via the user-mode API named SubmitThreadpoolWork, as an example.

If a host process is not identified in the action 202, the action 202 is repeated to continue monitoring for such host processes. The technique 200 therefore runs continuously or continually to detect multiple host processes that may be loaded over time.

FIG. 3 illustrates an example technique 300 that may be performed by the unmanaged interface module 112 to inject the managed interface module 114 into the host process 102. The technique 300 may be used in conjunction with the techniques described herein with respect to FIGS. 2, 4, and 5. For example, the technique 300 may be performed by the unmanaged interface module 112 after the unmanaged interface module 112 is injected.

An action 302 comprises detecting loading of the run-time system 106. In some cases, this may be performed by detecting the loading by the host process 102 of a target software component that implies the use of a run-time system such as CLR. More specifically, the action 302 may comprise detecting that any of the components *clrjit.dll, coreclr.dll* and *mscorjit.dll* are being or have been loaded. *clrjit.dll, coreclr.dll* and *mscorjit.dll* are modules implementing the CLR run-time system. Other DLLs can additionally or alternatively be detected as indications that the run-time system 106 is being loaded. The action 302 may be performed by registering for callbacks with the OS link loader.

An action 304 is performed if the run-time system 106 is not detected in the action 302. The action 304 comprises detecting the loading of the scripting engine 104. In some cases, this may be performed by detecting the loading, by the host process 102, of a DLL module corresponding to the scripting engine 104. For example, the action 304 may comprise detecting whether either of the components *System.Management.Automation.dll* or *System.Management.Automation.ni.dll* are being or have been loaded. *System.Management.Automation.dll* and *System.Management.Automation.ni.dll* are modules implementing the Windows^{®} PowerShell^{®} engine. Other DLL modules can additionally or alternatively be detected as indications that the scripting engine 104 is being loaded, including modules that implement the JScript^{®} scripting engine and/or other scripting engines. DLL detection can be performed as discussed herein with reference to action 202, using the kernel-mode callback API named PsSetLoadImageNotifyRoutine.

An action 306 may be initiated in response to detecting that the scripting engine 104 or the run-time system 106 have been or are being loaded as determined in the actions 302 and 304. The action 306 comprises injecting the managed interface module 114 into the host process 102. The managed interface module 114 comprises managed code configured to execute under the management of the run-time system 106.

Injecting the managed interface module 114 may be performed by retrieving an interface that allows the unmanaged interface module 112 to interact with the CLR. The CoCreateInstance API may be used on older versions of Powershell. The ICLRRuntimeInfoGetInterface may be used for newer Powershell versions. The unmanaged interface module 112 then instructs the CLR to load the managed interface component 114 using the retrieved interface. The AppDomainCreateInstanceFrom API may be used for this purpose.

If it is not determined that the scripting engine 104 or the run-time system 106 are being loaded, the technique 300 is repeated to continue monitoring for loading of the scripting engine 104 or the run-time system 106. The technique 300 runs repeatedly to detect and respond to the loading of multiple instances of the scripting engine 104 within the host process 102. For example, it is possible to concurrently run different versions of the Windows^{®} PowerShell^{®} engine within the same process. Repeating the technique 300 allows detection of multiple PowerShell^{®} engine instances.

FIG. 4 illustrates an example technique 400 that may be performed by the managed interface module 114 to insert inline hooks into certain of the methods 108 in order to intercept command content. The technique 400 may be used in conjunction with the techniques described herein with respect to FIGS. 2, 3, and 5. For example, technique 300 may be performed by the managed interface module 114 after the managed interface module 114 is injected (action 306).

An action 402 comprises determining whether one or more target assemblies of a target software component have been loaded. More specifically, the action 402 may comprise detecting the loading by the host process 102 of certain scripting engine assemblies. In particular, the managed interface module 114 detects the loading of certain components (e.g., assemblies) of the scripting engine 104 that are used when processing command content. Detecting that these target assemblies have been loaded may be performed using callback techniques that are analogous to those described above with reference to the actions 302 and 304, except that a C# (or other CLR) API is used rather than a C++ API. Specifically, the AppDomain_AssemblyLoad event callback may be used. Depending on the PowerShell^{®} version, the target assemblies may include *System.Management.Automation* and/or *Microsoft.PowerShell. Commands. Utility.*

An action 404, performed by the managed interface module 114 in response to determining that one or more target assemblies have been loaded, comprises installing inline hooks in certain methods of these assemblies, to intercept command content before it is executed by the scripting engine 104. In the .NET Framework, inline hooking is performed using a method called *PrepareMethod.* In the .NET Core environment, inline hooking may be performed using an undocumented method called *_CompileMethod.*

The methods that are hooked are methods that are invoked prior to execution of any command content. Table 1 below indicates the methods that are hooked in an example implementation. Table 1 also indicates the target assemblies that contain the hooked methods for different versions of PowerShell^{®}.

**Table 1**

| Ver. | Target Assemblies | Methods to be Hooked |
|---|---|---|
| 6 | System.Management. | AmsiUtils.WinScanContent |
| | Automation | Pipeline.Pipeline |
| | | LocalRunspace .DoCloseHelper |
| 5 | System.Management. | AmsiUtils.ScanContent |
| | Automation | Pipeline.Pipeline |
| | | LocalRunspace .DoCloseHelper |
| 4 | System.Management. | CompiledScriptBlockData.CompileOptimized |
| | Automation | CompiledScriptBlockData.CompileUnoptimized |
| | | Pipeline.Pipeline |
| | | LocalRunspace .DoCloseHelper |
| 3 | System.Management. | CompiledScriptBlockData.CompileOptimized |
| | Automation | CompiledScriptBlockData.CompileUnoptimized |
| | | Pipeline.Pipeline |
| | | LocalRunspace .DoCloseHelper |
| 2 | System.Management. | CommandProcessorBase.DoComplete |
| | Automation | InvokeExpressionCommand.ProcessRecord |
| | Microsoft.PowerShell. | Pipeline.Pipeline |
| | Commands .Utility | LocalRunspace .DoCloseHelper |

After the techniques 200, 300, and 400 have been performed, there is a communication path from the hooked methods 108, through the managed interface module 114, through the unmanaged interface module 112, to the threat detection component 110. When a hooked method of the scripting engine 104 is invoked, the managed interface module 114 receives a callback, obtains the command content, and forwards the command content to the threat detection component 110. The threat detection provides a reply to either allow or prevent execution of the command content.

Using this technique, the unmanaged software module 112 and the managed interface module 114 interface between the threat detection component 110 and the host process 102, thereby limiting the amount of customization that is needed to the threat detection component 110 in order to intercept command content. The technique also allows the detection of more than one instance of a scripting engine within a managed process. For example, a given process may run PowerShell^{®} versions 2 and 5 concurrently. The techniques described above allow the unmanaged interface module 112 to detect and hook both versions. In addition, the techniques allow detection not only of command scripts that are about to be executed, but also of interactively typed commands. This is because all script commands are processed by the hooked methods, whether the commands originate from a command script provided by a host process or from an interactively typed command.

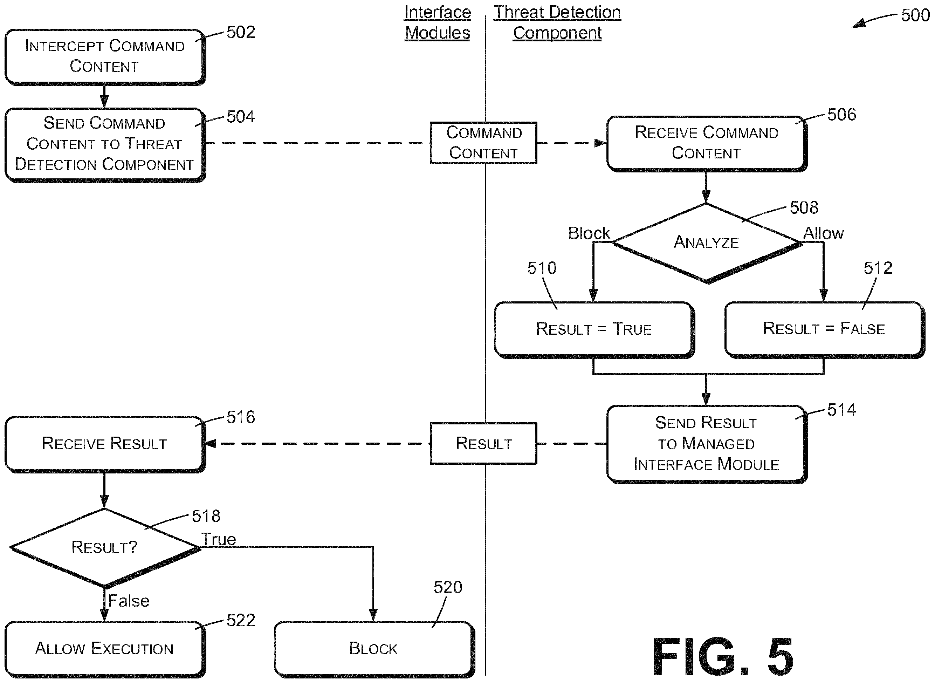

FIG. 5 illustrates an example technique 500 that may be performed by a computer for blocking harmful command content from being executed by a scripting engine. The technique 500 may be used in conjunction with the techniques described herein with respect to FIGS. 2, 3, and 4.

In the described embodiment, actions on the left of FIG. 5 are performed by the managed interface module 114 (e.g., after action 306) and/or the unmanaged interface module 112 (e.g., after action 204). In the described embodiment, actions on the right of FIG. 5 are performed by the threat detection component 110.

An action 502 comprises intercepting command content that has been submitted to the scripting engine 104 for execution. In some embodiments, the action 502 may comprise using hooking techniques described above, in which hooks are placed in certain methods such as those shown in Table 1, above. For example, the action 502 can be performed after the action 404. The action 502 can include receiving command content that is about to be processed by the scripting engine. In many cases, the intercepted command content will be returned to the scripting engine for normal processing. In some cases, however, the action 502 may comprise throwing an exception to block execution of the command content. In other cases, the command content may not be returned to the scripting engine, or may be modified before it is returned, thereby effectively blocking the command content.

An action 504 comprises sending the intercepted command content to the threat detection component 110. In described embodiments, this may comprise communicating the command content from the managed interface module 114, to the unmanaged interface module 112, which in turn relays the command content to the threat detection component 110.

An action 506, performed by the threat detection component 110, comprises receiving the command content.

An action 508 comprises analyzing the command content to determine whether it should be blocked. If the action 508 determines that the command content should be blocked, an action 510 is performed, comprising setting a RESULT variable to "True". If the action 508 determines that the command content does not need to be blocked, an action 512 is performed, comprising setting the RESULT variable to "false". The RESULT variable can be represented as a Boolean variable, a number, a string, a bit flag, or another type of data.

In some embodiments, the action 508 may use precompiled regular expressions to detect malicious commands. Regular expression checking may be used to identify commands having malicious patterns. Expression checking such as this may be used for script files as well as interactively-typed commands. In the case of a script file, a hash of the file is compared against hashes of known malicious script files to determine whether the script file is malicious.

An action 514 is then performed, which comprises communicating to the managed interface module 114, through the unmanaged interface module 112, to either block the intercepted command content or to allow execution of the intercepted command content. In the described example, the action 516 comprises sending a reply to the managed interface module 114 via the unmanaged interface module 112, where the reply specifies the RESULT value.

An action 516, performed by the unmanaged interface module 112 and/or the managed interface module 114, comprises receiving a reply specifying the RESULT variable.

Communications between the kernel-mode threat detection component 110 and the user-mode unmanaged interface module 112 are implemented as data objects copied into and from the kernel mode. Communications between the unmanaged interface module 112 and the managed interface module 114 may be performed using APIs that are implemented by the interfaces for that purpose.

In response to receiving the RESULT variable, an action 518 is performed of determining whether the RESULT variable is true or false (as expressed in the data type of the RESULT variable). If the RESULT variable is true, an action 520 is performed of blocking the intercepted command content, where the term "blocking" indicates that the intercepted command content is prevented from being executed by the scripting engine 104, e.g., as discussed below. If the RESULT variable is "false", an action 522 is performed of allowing or causing the command content to be execute by the scripting engine 104. In some cases, the command content may also be quarantined, such as by moving resources responsible for the command content to a different location on the storage of the computer.

The managed interface module 114 may block command content in various ways, depending on the details of the inline hooking that have been implemented. If no blocking is performed, for example, the action 522 may comprise calling the method that was hooked with the original arguments (e.g., the originally specified command content). If blocking is performed, the action 520 may comprise not calling the method, and throwing an exception. In some cases, the action 520 may comprise calling the method with altered arguments.

Communicating the result of the analyzing action 508 to the unmanaged interface module 112 and/or the managed interface module 114 may also be performed in various different ways, not limited to returning a true/false value as described above. For example, the reply from the threat detection component 110 might specify either the originally obtained command content (for no blocking) or modified command content (for blocking), where the modified command content is modified in a way such that its execution will not be harmful. The modified command content may for example comprise a null string or a command that displays an error message. The managed interface module 114 receives the reply and the specified command string, and calls the hooked method with this command string as an argument. This can be used to effectively block execution of the original command string.

In cases where the Windows^{®} Antimalware Scan Interface (AMSI) is available, the managed interface module 114 may not be needed, and the unmanaged interface module 112 may communicate with AMSI directly to intercept and block command content. Specifically, the unmanaged interface module 112 may be registered as an AMSI provider to receive intercepted command content. The registering may be in lieu of the action 306, for example, and the technique 400 may be omitted or performed by AMSI.

The example techniques are described herein in the context of detecting activities of malware or of attackers. However, the techniques may also apply to other non-malicious software, processes, or other system components. For example, techniques described herein can be used in determining which processes are accessing particular files or other system resources, or in analyzing causes of excess resource usage by processes. Accordingly, techniques discussed herein for analyzing scripts may be used by, among others, anti-malware security researchers, white-hat vulnerability researchers, or other analysts of event streams.

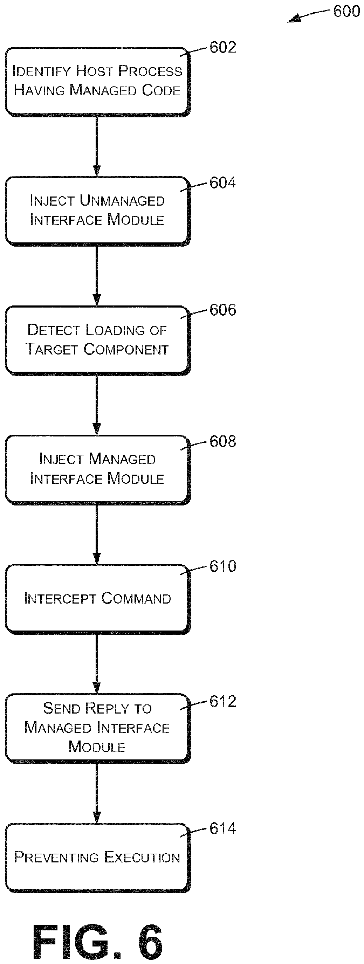

FIG. 6 illustrates an example technique 600 that may be performed by a computer for blocking command content from being executed by a scripting engine.

An action 602, which may be performed by a threat detection component, comprises identifying a host process having first managed code that executes under management of a run-time system. In some embodiments, the action 602 may be performed as described above with reference to the action 202 of FIG. 2.

An action 604, which may be performed by the threat detection component in response to identifying the host process, comprises injecting an unmanaged interface module into the host process, wherein the unmanaged interface module comprises unmanaged code. In some embodiments, the action 602 may be performed above as described with reference to the action 204 of FIG. 2.

An action 606, which may be performed by the unmanaged interface module, comprises detecting loading of a target software component by the host process. In some embodiments, the action 606 may be performed as described above with reference to the actions 302 and 304 of FIG. 3.

An action 608, which may be performed by the unmanaged interface module in response to detecting the loading of the target software component, comprises injecting a managed interface module into the host process. The managed interface module comprises managed code that executes under the management of the run-time code manage. The managed interface module is configured to intercept command content before its execution by the scripting engine. In some embodiments, the action 608 may be performed above as described with reference to the action 306 of FIG. 3.

An action 610 comprises communicating an intercepted command from the managed interface module, through the unmanaged interface module, and to the threat detection component. In some embodiments, the action 610 may be performed above as described with reference to the action 514 of FIG. 5.

An action 612 comprises communicating a reply from the threat detection component, through the unmanaged interface module, to the managed interface module, wherein the reply is to block the intercepted command. In some embodiments, the action 612 may be performed above as described with reference to the action 514 of FIG. 5.

An action 614, performed by the managed interface module in response to the reply, comprises preventing the intercepted command content from being executed by the scripting engine. In some embodiments, the action 614 may be performed above as described with reference to the actions 518, 520, and 522 of FIG. 5.

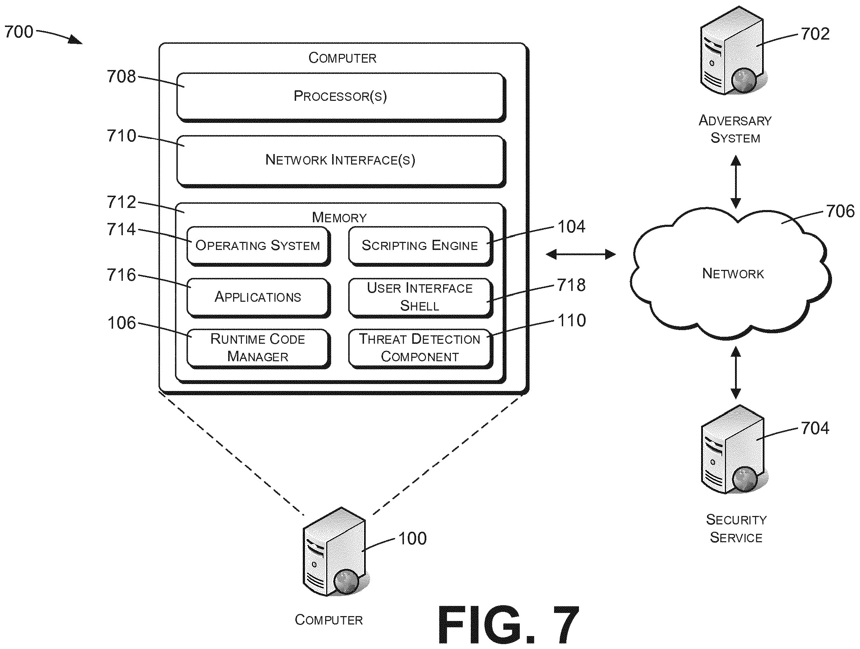

FIG. 7 generally illustrates further details of the computer 100 and an example environment 700 in which the described techniques may be implemented. The computer 100 may be communicatively connected to an adversary system 702 and a security service 704 via a network 706. The computer 100, the adversary system 702, and the security service 704 may each be or include a computing device, such as a PC, a laptop computer, a server, a server farm(s), a mainframe, a tablet computer, a work station, a telecommunication device, a PDA, a media player, a media center device, a PVR, a television, an electronic book reader, a set-top box, a camera, a video game console, a kiosk, a gaming device, processor(s), integrated components for inclusion in a computing device, an appliance, an electronic device for inclusion in vehicles, a gaming device, or any other sort of device. For example, the security service 704 may be implemented as a remote security system (e.g., a cloud security service) or an on-premises security appliance. In some examples, the security service 704 can be deployed as a computing appliance operated by or on behalf of a particular user, group, or organization. For example, a corporation may deploy an appliance per office site, per division, or for the company as a whole. In some examples, the computing appliance can be a central, single-tenant, on-premises appliance. In some examples, a computing appliance can be used to implement at least a portion of security service 704 in addition to, or instead of, a cloud service.

In various embodiments, the adversary system 702 may be associated with any security exploit which is directed to a vulnerability of the computer 100. The adversary system 702 may provide the security exploit to the computer 100 in some manner, such as by way of user-mode host process, as described above, that exploits capabilities of a hosted scripting engine. In some examples, an adversary may install malware directly on the computer 100, e.g., via network 706 or other attack vectors (such as a thumb drive). Accordingly, techniques 200-500 may be used independently of whether an adversary system 702 is actively connected to the computer 100 via the network 706 at any given time.

In certain embodiments, the security service 704 may install the threat detection component 110 on the computer 100, and the threat detection component 110 may then communicate with the security service 704 to provide threat detection, system monitoring, and threat remediation services.

The network 706 may be any sort of network or networks that connect the computer 100, adversary system 702, and security service 704. Also, the network 706 may connect any of the computer 100, adversary system 702, and security service 704 to other devices. The network 706 may be any type of network, such as a wide area network (WAN), a local area network (LAN), or the Internet. Also, the network 706 may be public, private, or include both public and private networks. Further, the network 706 may be wired, wireless, or include both wired and wireless networks. The network 706 may utilize any one or more protocols for communication, such as the Internet Protocol (IP), other packet-based protocols, or other protocols. Additionally, the network 706 may comprise any number of intermediary devices, such as routers, base stations, access points, firewalls, or gateway devices.

The computer 100 includes processor(s) 708, network interface(s) 710, memory 712, which includes both volatile memory and persistent storage. The processor(s) 708 may include any one or more central processing units or graphic processing units. The network interface(s) 710 may support both wired and wireless connections to networks, such as cellular networks, radio, WiFi networks, short range networks (e.g., Bluetooth, IR, and so forth.).

The memory 712 may comprise tangible, non-transitory computer-readable storage media, which may include both volatile (e.g., RAM) and non-volatile storage (e.g. ROM). Non-volatile storage (sometimes referred to herein as the disk of the computer 100) may include, but is not limited to, read-only memory (ROM), electrically erasable programmable read-only memory (EEPROM), flash memory, or other memory technology, or any other medium which can be used to store content, applications for access by the computer 100. The term "non-transitory", as used herein, is a characterization of the medium itself (i.e., not a propagating electromagnetic signal) and does not imply any limitation with regard to data storage persistency. Accordingly, the various types of memory mentioned above, such as ROM, RAM, EEPROM, hard disks, flash memory, etc., are all examples of non-transitory media. The computer 100 may also use non-volatile cloud-based storage, and any of the components shown as being in the memory 712 may also, or alternatively, be stored on Internet-based or other network-based storage devices.

Various data and software components may be stored by and in the memory 712, such as an operating system 714 and various applications 716. The applications 716 may include an application that creates the host process 102.

The memory 712 may also contain the run-time system 106, the scripting engine 104, a user interface shell 718 associated with the scripting engine 104, and the threat detection component 110. These software components may be stored in persistent storage and moved to and from volatile memory (e.g., RAM, memory cache, etc.) as needed.

The computer 100 may of course have many other components, such as a keyboard, a display, various input/output ports and interfaces, device drivers, audio components, video components, communication components, and so forth.

### CONCLUSION

Many variations and modifications can be made to the above-described examples, the elements of which are to be understood as being among other acceptable examples. All such modifications and variations are intended to be included herein within the scope of this disclosure and protected by the claims. Moreover, this disclosure is inclusive of combinations of the aspects described herein. References to "a particular aspect" (or "embodiment" or "version") and the like refer to features that are present in at least one aspect of Attorney Docket No. C052-0048US the invention. Separate references to "an aspect" (or "embodiment") or "particular aspects" or the like do not necessarily refer to the same aspect or aspects; however, such aspects are not mutually exclusive, unless so indicated or as are readily apparent to one of skill in the art. The use of singular or plural in referring to "technique" or "techniques" and the like is not limiting.

Example computer-implemented operations described herein can additionally or alternatively be embodied in specialized computer hardware, e.g., field-programmable gate arrays (FPGAs). For example, various aspects herein may take the form of an entirely hardware aspect, an entirely software aspect (including firmware, resident software, micro-code, etc.), or an aspect combining software and hardware aspects.

The word "or" and the phrase "and/or" are used herein in an inclusive sense unless specifically stated otherwise. Accordingly, conjunctive language such as, but not limited to, at least one of the phrases "X, Y, or Z," "at least X, Y, or Z," "at least one of X, Y or Z," "one or more of X, Y, or Z," and/or any of those phrases with "and/or" substituted for "or," unless specifically stated otherwise, is to be understood as signifying that an item, term, etc. can be either X, or Y, or Z, or a combination of any elements thereof (e.g., a combination of XY, XZ, YZ, and/or XYZ). Any use herein of phrases such as "X, or Y, or both" or "X, or Y, or combinations thereof' is for clarity of explanation and does not imply that language such as "X or Y" excludes the possibility of both X and Y, unless such exclusion is expressly stated.

As used herein, language such as "one or more Xs" shall be considered synonymous with "at least one X" unless otherwise expressly specified. Any recitation of "one or more Xs" signifies that the described steps, operations, structures, or other features may, e.g., include, or be performed with respect to, exactly one X, or a plurality of Xs, in various examples, and that the described subject matter operates regardless of the number of Xs present, as long as that number is greater than or equal to one.

Conditional language such as, among others, "can," "could," "might" or "may," unless specifically stated otherwise, are understood within the context to present that certain examples include, while other examples do not include, certain features, elements, or steps. Thus, such conditional language is not generally intended to imply that certain features, elements, or steps are in any way required for one or more examples or that one or more examples necessarily include logic for deciding, with or without user input or prompting, whether certain features, elements, or steps are included or are to be performed in any particular example.

In the claims, any reference to a group of items provided by a preceding claim clause is a reference to at least some of the items in the group of items, unless specifically stated otherwise. This document expressly envisions alternatives with respect to each and every one of the following claims individually, in any of which claims any such reference refers to each and every one of the items in the corresponding group of items. Additionally, in any claim using the "comprising" transitional phrase, a recitation of a specific number of components (e.g., "two Xs") is not limited to embodiments including exactly that number of those components, unless expressly specified (e.g., "exactly two Xs"). However, such a claim does describe both embodiments that include exactly the specified number of those components and embodiments that include at least the specified number of those components.

## Claims

1. A method performed by a computer (100) for blocking command content from being executed by a scripting engine (104, 118), comprising:
identifying (602) a host process (102) having first managed code that executes under management of a run-time code manager;
injecting (604) an unmanaged interface module (112, 124) into the host process (102), wherein the unmanaged interface module comprises unmanaged code;
detecting (606), by the unmanaged interface module (112, 124), loading of a target software component by the host process (102);
injecting (608), by the unmanaged interface module (112, 124) in response to detecting the loading of the target software component, a managed interface module into the host process (102), the managed interface module comprising second managed code that executes under the management of the run-time code manager, the managed interface module being configured to intercept the command content before its execution by the scripting engine (104, 118);
communicating (610) an intercepted command from the managed interface module, through the unmanaged interface module (112, 124), and to a threat detection component (110), wherein the threat detection component (110, 112) is installed as a kernel-mode component;
communicating (612) a reply from the threat detection component (110), through the unmanaged interface module (112, 124), to the managed interface module, wherein the reply is to block the intercepted command; and
preventing (614), by the managed interface module in response to the reply, the intercepted command from being executed by the scripting engine.

2. The method of claim 1, wherein:
identifying (602) the host process (102) comprises detecting loading of a user interface shell by the host process (102), wherein the user interface shell provides interactively entered command content to the scripting engine; and
injecting (604) the unmanaged interface module (112, 124) is performed in response to detecting loading of the user interface shell by the host process (102).

3. The method of claim 1, wherein:
identifying (602) the host process (102) comprises determining that the host process is going to load the run-time code manager; and
injecting (604) the unmanaged interface module (112, 124) is performed in response to detecting that the host process (102) is going to load the run-time code manager.

4. The method of claim 1, wherein:
detecting (602) loading of the target software component comprises detecting loading of the scripting engine (104, 118) by the host process (102); and
injecting (604) the managed interface module is performed in response to detecting the loading of the scripting engine (104, 118) by the host process (102).

5. The method of claim 1, wherein:
detecting (606) loading of the target software component comprises detecting loading of the run-time code manager by the host process (102); and
injecting (608) the unmanaged interface module (112, 124) is performed in response to detecting the loading of the scripting engine.

6. The method of claim 1, wherein blocking the content is performed by communicating with an Antimalware Scripting Interface, AMSI.

7. The method of claim 1, wherein:
identifying the host process (102) comprises detecting loading of the scripting engine (104, 118) by the host process; and
the injecting is performed in response to identifying the host process (102).

8. The method of claim 1, wherein the scripting engine (104, 118) comprises a Visual Basic for Applications component.

9. The method of claim 1, wherein the scripting engine (104, 118) comprises a Jscript scripting engine.

10. One or more computer-readable media storing non-transitory computer-executable instructions for execution by one or more processors, the one or more computer-readable media comprising:
an unmanaged interface module (112, 124) configured to be injected into a host process, the unmanaged interface module (112, 124) comprising first instructions for intercepting command content before it is executed by a scripting engine (104, 118), the first instructions being represented as first managed code to be executed under management of a run-time code manager, the unmanaged interface configured to detect loading of a target software component by the host process (102);
a threat detection component (110) configured to be installed as a kernel-mode component, the threat detection component (110) comprising second instructions for receiving the intercepted command content and for providing a reply through the unmanaged interface module to block the intercepted command content; and
a managed interface module comprising second managed code that executes under the management of the run-time code manager, the managed interface module configured to be injected into the host process (102) by the unmanaged interface module (112, 124) in response to detecting the loading of the target software component, the managed interface module comprising third instructions for relaying the intercepted command from the unmanaged interface module (112, 124) to the threat detection component (110), the third instructions being represented as unmanaged code, the managed interface module configured to prevent the intercepted command from being executed by the scripting engine (104, 118).

11. The one or more computer-readable media of claim 10, the managed interface module comprising further instructions for relaying a reply from the threat detection component (110) to the unmanaged interface module (112, 124), the reply indicating whether to block the one or more commands.

12. The one or more computer-readable media of claim 10, the managed interface module comprising further instructions for:
detecting loading of the scripting engine (104, 118) by the host process (102); and
in response to the detecting, injecting the unmanaged interface module (112, 124) into the host process (102).

13. The one or more computer-readable media of claim 10, the managed interface module comprising further instructions for:
detecting loading of the run-time code manager by the host process (102); and
in response to detecting the loading, injecting the unmanaged interface module (112, 124) into the host process (102).

## Patentansprüche

1. Verfahren, das durch einen Computer (100) durchgeführt wird, zum Blockieren einer Ausführung von Befehlsinhalt durch eine Scripting-Engine (104, 118), das Folgendes umfasst:
Identifizieren (602) eines Host-Vorgangs (102), der ersten verwalteten Code aufweist, der unter Verwaltung eines Laufzeitcodemanagers ausgeführt wird;
Eingeben (604) eines nicht verwalteten Schnittstellenmoduls (112, 124) in den Host-Vorgang (102), wobei das nicht verwaltete Schnittstellenmodul nicht verwalteten Code umfasst;
Erfassen (606), durch das nicht verwaltete Schnittstellenmodul (112, 124), eines Ladens einer Zielsoftwarekomponente durch den Host-Vorgang (102);
Eingeben (608), durch das nicht verwaltete Schnittstellenmodul (112, 124) als Reaktion auf das Erfassen des Ladens der Zielsoftwarekomponente, eines verwalteten Schnittstellenmoduls in den Host-Vorgang (102), wobei das verwaltete Schnittstellenmodul zweiten verwalteten Code umfasst, der unter der Verwaltung des Laufzeitcodemanagers ausgeführt wird, wobei das verwaltete Schnittstellenmodul konfiguriert ist, um den Befehlsinhalt vor seiner Ausführung durch die Scripting-Engine (104, 118) abzufangen;
Kommunizieren (610) eines abgefangenen Befehls von dem verwalteten Schnittstellenmodul, über das nicht verwaltete Schnittstellenmodul (112, 124), und an eine Bedrohungserfassungskomponente (110), wobei die Bedrohungserfassungskomponente (110, 112) als eine Kernelmoduskomponente installiert ist;
Kommunizieren (612) einer Antwort von der Bedrohungserfassungskomponente (110), über das nicht verwaltete Schnittstellenmodul (112, 124), an das verwaltete Schnittstellenmodul, wobei die Antwort den abgefangenen Befehl blockieren soll; und
Verhindern (614), durch das verwaltete Schnittstellenmodul als Reaktion auf die Antwort, dass der abgefangene Befehl durch die Scripting-Engine ausgeführt wird.

2. Verfahren nach Anspruch 1, wobei:
das Identifizieren (602) des Host-Vorganges (102) das Erfassen des Ladens einer Benutzerschnittstellen-Shell durch den Host-Vorgang (102) umfasst, wobei die Benutzerschnittstellen-Shell der Scripting-Engine eingegebenen Befehlsinhalt interaktiv bereitstellt; und
das Eingeben (604) des nicht verwalteten Schnittstellenmoduls (112, 124) als Reaktion auf das Erfassen des Ladens der Benutzerschnittstellen-Shell durch den Host-Vorgang (102) durchgeführt wird.

3. Verfahren nach Anspruch 1, wobei:
das Identifizieren (602) des Host-Vorganges (102) ein Bestimmen umfasst, dass der Host-Vorgang den Laufzeitcodemanager laden wird; und
das Eingeben (604) des nicht verwalteten Schnittstellenmoduls (112, 124) als Reaktion auf das Erfassen, dass der Host-Vorgang (102) den Laufzeitcodemanager laden wird, durchgeführt wird.

4. Verfahren nach Anspruch 1, wobei:
das Erfassen (602) des Ladens der Zielsoftwarekomponente das Erfassen des Ladens der Scripting-Engine (104, 118) durch den Host-Vorgang (102) umfasst; und
das Eingeben (604) des verwalteten Schnittstellenmoduls als Reaktion auf das Erfassen des Ladens der Scripting-Engine (104, 118) durch den Host-Vorgang (102) durchgeführt wird.

5. Verfahren nach Anspruch 1, wobei:
das Erfassen (606) des Ladens der Zielsoftwarekomponente das Erfassen des Ladens des Laufzeitcodemanagers durch den Host-Vorgang (102) umfasst; und
das Eingeben (608) des nicht verwalteten Schnittstellenmoduls (112, 124) als Reaktion auf das Erfassen des Ladens der Scripting-Engine durchgeführt wird.

6. Verfahren nach Anspruch 1, wobei das Blockieren des Inhalts durch Kommunizieren mit einer Antimalware-Scripting-Schnittstelle (Antimalware Scripting Interface - AMSI) durchgeführt wird.

7. Verfahren nach Anspruch 1, wobei:
das Identifizieren des Host-Vorganges (102) das Erfassen des Ladens der Scripting-Engine (104, 118) durch den Host-Vorgang umfasst; und
das Eingeben als Reaktion auf das Identifizieren des Host-Vorganges (102) durchgeführt wird.

8. Verfahren nach Anspruch 1, wobei die Scripting-Engine (104, 118) eine Visual Basic for Applications-Komponente umfasst.

9. Verfahren nach Anspruch 1, wobei die Scripting-Engine (104, 118) eine Jscript-Scripting-Engine umfasst.

10. Ein oder mehrere computerlesbare Medien, die nicht-flüchtige computerausführbare Anweisungen für die Ausführung durch einen oder mehrere Prozessoren speichern, wobei das eine oder die mehreren computerlesbaren Medien Folgendes umfassen:
ein nicht verwaltetes Schnittstellenmodul (112, 124), das konfiguriert ist, um in einen Host-Vorgang eingegeben zu werden, wobei das nicht verwaltete Schnittstellenmodul (112, 124) erste Anweisungen zum Abfangen von Befehlsinhalt umfasst, bevor es durch eine Scripting-Engine (104, 118) ausgeführt wird, wobei die ersten Anweisungen als erster verwalteter Code dargestellt werden, der unter Verwaltung eines Laufzeitcodemanagers ausgeführt werden soll, wobei die nicht verwaltete Schnittstelle konfiguriert ist, um das Laden einer Zielsoftwarekomponente durch den Host-Vorgang (102) zu erfassen;
eine Bedrohungserfassungskomponente (110), die konfiguriert ist, um als eine Kernelmoduskomponente installiert zu werden, wobei die Bedrohungserfassungskomponente (110) zweite Anweisungen zum Empfangen des abgefangenen Befehlsinhalts und zum Bereitstellen einer Antwort über das nicht verwaltete Schnittstellenmodul umfasst, um den abgefangenen Befehlsinhalt zu blockieren; und
ein verwaltetes Schnittstellenmodul, das einen zweiten verwalteten Code umfasst, der unter der Verwaltung des Laufzeitcodemanagers ausgeführt wird, wobei das verwaltete Schnittstellenmodul konfiguriert ist, um als Reaktion auf das Erfassen des Ladens der Zielsoftwarekomponente durch das nicht verwaltete Schnittstellenmodul (112, 124) in den Host-Vorgang (102) eingegeben zu werden, wobei das verwaltete Schnittstellenmodul dritte Anweisungen zum Weiterleiten des abgefangenen Befehls von dem nicht verwalteten Schnittstellenmodul (112, 124) an die Bedrohungserfassungskomponente (110) umfasst, wobei die dritten Anweisungen als nicht verwalteter Code dargestellt werden, wobei das verwaltete Schnittstellenmodul konfiguriert ist, um zu verhindern, dass der abgefangene Befehl durch die Scripting-Engine (104, 118) ausgeführt wird.

11. Ein oder mehrere computerlesbare Medien nach Anspruch 10, wobei das verwaltete Schnittstellenmodul weitere Anweisungen zum Weiterleiten einer Antwort von der Bedrohungserfassungskomponente (110) an das nicht verwaltete Schnittstellenmodul (112, 124) umfasst, wobei die Antwort angibt, ob der eine oder die mehreren Befehle blockiert werden sollen.

12. Ein oder mehrere computerlesbare Medien nach Anspruch 10, wobei das verwaltete Schnittstellenmodul weitere Anweisungen für Folgendes umfasst:
Erfassen des Ladens der Scripting-Engine (104, 118) durch den Host-Vorgang (102); und
als Reaktion auf das Erfassen, Eingeben des nicht verwalteten Schnittstellenmoduls (112, 124) in den Host-Vorgang (102).

13. Ein oder mehrere computerlesbare Medien nach Anspruch 10, wobei das verwaltete Schnittstellenmodul weitere Anweisungen für Folgendes umfasst:
Erfassen des Ladens des Laufzeitcodemanagers durch den Host-Vorgang (102); und
als Reaktion auf das Erfassen des Ladens, Eingeben des nicht verwalteten Schnittstellenmoduls (112, 124) in den Host-Vorgang (102).

## Revendications

1. Procédé réalisé par un ordinateur (100) permettant d'empêcher le contenu de commande d'être exécuté par un moteur de script (104, 118), comprenant :
l'identification (602) d'un processus hôte (102) ayant un premier code géré qui s'exécute sous la gestion d'un gestionnaire de code d'exécution ;
l'injection (604) d'un module d'interface non géré (112, 124) dans le processus hôte (102), le module d'interface non géré comprenant un code non géré ;
la détection (606), par le module d'interface non géré (112, 124), du chargement d'un composant logiciel cible par le processus hôte (102) ;
l'injection (608), par le module d'interface non géré (112, 124) en réponse à la détection du chargement du composant logiciel cible, d'un module d'interface géré dans le processus hôte (102), le module d'interface géré comprenant un second code géré qui s'exécute sous la gestion du gestionnaire de code d'exécution, le module d'interface géré étant configuré pour intercepter le contenu de commande avant son exécution par le moteur de script (104, 118) ;
la communication (610) d'une commande interceptée à partir du module d'interface géré, par l'intermédiaire du module d'interface non géré (112, 124), et à un composant de détection de menace (110), le composant de détection de menace (110, 112) étant installé en tant que composant en mode noyau ;
la communication (612) d'une réponse du composant de détection de menace (110), par l'intermédiaire du module d'interface non géré (112, 124), au module d'interface géré, la réponse étant de bloquer la commande interceptée ; et
le fait d'empêcher (614), par le module d'interface géré en réponse à la réponse, la commande interceptée d'être exécutée par le moteur de script.

2. Procédé selon la revendication 1, dans lequel :
l'identification (602) du processus hôte (102) comprend la détection du chargement d'un interpréteur de commandes d'interface utilisateur par le processus hôte (102), l'interpréteur de commandes d'interface utilisateur fournissant un contenu de commande entré de manière interactive au moteur de script ; et
l'injection (604) du module d'interface non géré (112, 124) est effectuée en réponse à la détection du chargement du l'interpréteur de commandes d'interface utilisateur par le processus hôte (102).

3. Procédé selon la revendication 1, dans lequel :
l'identification (602) du processus hôte (102) comprend la détermination du fait que le processus hôte va charger le gestionnaire de code d'exécution ; et
l'injection (604) du module d'interface non géré (112, 124) est effectuée en réponse à la détection que le processus hôte (102) va charger le gestionnaire de code d'exécution.

4. Procédé selon la revendication 1, dans lequel :
la détection (602) du chargement du composant logiciel cible comprend la détection du chargement du moteur de script (104, 118) par le processus hôte (102) ; et
l'injection (604) du module d'interface géré est effectuée en réponse à la détection du chargement du moteur de script (104, 118) par le processus hôte (102).

5. Procédé selon la revendication 1, dans lequel :
la détection (606) du chargement du composant logiciel cible comprend la détection du chargement du gestionnaire de code d'exécution par le processus hôte (102) ; et
l'injection (608) du module d'interface non géré (112, 124) est effectuée en réponse à la détection du chargement du moteur de script.

6. Procédé selon la revendication 1, dans lequel le blocage du contenu est effectué en communiquant avec une interface de script anti-logiciel malveillant, AMSI.

7. Procédé selon la revendication 1, dans lequel :
l'identification du processus hôte (102) comprend la détection du chargement du moteur de script (104, 118) par le processus hôte ; et
l'injection est effectuée en réponse à l'identification du processus hôte (102).

8. Procédé selon la revendication 1, dans lequel le moteur de script (104, 118) comprend un composant Visual Basic for Applications.

9. Procédé selon la revendication 1, dans lequel le moteur de script (104, 118) comprend un moteur de script Jscript.

10. Un ou plusieurs supports lisibles par ordinateur stockant des instructions exécutables par ordinateur non transitoires pour l'exécution par un ou plusieurs processeurs, le ou les supports lisibles par ordinateur comprenant :
un module d'interface non géré (112, 124) configuré pour être injecté dans un processus hôte, le module d'interface non géré (112, 124) comprenant des premières instructions pour intercepter le contenu de commande avant qu'il ne soit exécuté par un moteur de script (104, 118), les premières instructions étant représentées comme le premier code géré à exécuter sous la gestion d'un gestionnaire de code d'exécution, l'interface non gérée étant configurée pour détecter le chargement d'un composant logiciel cible par le processus hôte (102) ;
un composant de détection de menace (110) configuré pour être installé en tant que composant en mode noyau, le composant de détection de menace (110) comprenant des deuxièmes instructions pour recevoir le contenu de commande intercepté et pour fournir une réponse par l'intermédiaire du module d'interface non géré afin de bloquer le contenu de commande intercepté ; et
un module d'interface géré comprenant un second code géré qui s'exécute sous la gestion du gestionnaire de code d'exécution, le module d'interface géré étant configuré pour être injecté dans le processus hôte (102) par le module d'interface non géré (112, 124) en réponse à la détection du chargement du composant logiciel cible, le module d'interface géré comprenant des troisièmes instructions pour relayer la commande interceptée du module d'interface non géré (112, 124) vers le composant de détection de menace (110), les troisièmes instructions étant représentées sous forme de code non géré, le module d'interface étant configuré pour empêcher la commande interceptée d'être exécutée par le moteur de script (104, 118).

11. Un ou plusieurs supports lisibles par ordinateur selon la revendication 10, le module d'interface géré comprenant des instructions supplémentaires pour relayer une réponse du composant de détection de menace (110) au module d'interface non géré (112, 124), la réponse indiquant s'il faut bloquer la ou les commandes.

12. Un ou plusieurs supports lisibles par ordinateur selon la revendication 10, le module d'interface géré comprenant des instructions supplémentaires pour :
détecter le chargement du moteur de script (104, 118) par le processus hôte (102) ; et
en réponse à la détection, injecter le module d'interface non géré (112, 124) dans le processus hôte (102).

13. Un ou plusieurs supports lisibles par ordinateur selon la revendication 10, le module d'interface géré comprenant des instructions supplémentaires pour :
détecter le chargement du gestionnaire de code d'exécution par le processus hôte (102) ; et
en réponse à la détection du chargement, injecter le module d'interface non géré (112, 124) dans le processus hôte (102).
